# EUROPÄISCHE PATENTSCHRIFT

(11) **EP 0 565 742 B1**
(45) Veröffentlichungstag und Bekanntmachung des Hinweises auf die Patenterteilung: **01.03.1995**
(21) Anmeldenummer: 92106305.3
(22) Anmeldetag: 11.04.1992
(51) Int. Cl.: B23K 26/00, F02F 1/20

(54) **Verfahren zur Feinbearbeitung von Werkstück-Oberflächen**
Procedure of fine machining workpiece surfaces
Procédé pour le finissage de surfaces de pièces

(43) Veröffentlichungstag der Anmeldung: 20.10.1993
(73) Patentinhaber: Maschinenfabrik Gehring GmbH & Co., D-73760 Ostfildern (DE)
(72) Erfinder: Grimm, Hans, W-7300 Esslingen (DE); Lang, Walter, W-7012 Fellbach (DE); Bergen, Karl-Heinz, Dr., W-7024 Filderstadt (DE); Lang, Ernst, W-7302 Ostfildern 1 (DE); Klink, Ulrich, W-7442 Neuffen (DE)
(74) Vertreter: Wasmuth, Rolf, Dipl.-Ing.

(56) Entgegenhaltungen:
- DE-A- 3 719 796
- DE-A- 3 932 328
- DE-C- 299 125
- PATENT ABSTRACTS OF JAPAN vol. 12, no. 208 (M-709)(3055) 15. Juni 1988 & JP-A-63 012 867 (MITSUBISHI HEAVY IND LTD) 20 Januar 1988

## Beschreibung

Die Erfindung betrifft ein Verfahren zur Feinbearbeitung von Werkstück-Oberflächen, insbesondere von Wandungen der Bohrungen eines Verbrennungsmotors, nach dem Oberbegriff des Patentanspruches 1.

Zur Erzeugung von hochbelastbaren Oberflächen, beispielsweise von Bohrungswandungen, welche die Zylinderlaufflächen von Kolbenmotoren bilden, ist die Technik des Honens mit anschließendem Plateauhonen bekannt. Bei diesem Verfahren wird eine Bohrung, die beispielsweise durch Feinbohren vorbearbeitet ist, zunächst auf ein Maß gehont, das wenige »m unter dem Endmaß liegt. Durch das Honen soll die Bohrung eine hohe Form- und Maßgenauigkeit und eine genaue Rauhtiefe erhalten. Dieser Arbeitsschritt wird in einer oder mehreren Honoperationen, beispielsweise durch Vor- und Zwischenhonen ausgeführt. Die dabei von den Honsteinen erzeugten, einander kreuzenden Honspuren bilden beim späteren Einsatz des Werkstückes, das beispielsweise aus Gußeisen besteht, ein Reservoir für das notwendige Schmiermittel. Beim anschließenden Plateauhonen wird mit einem sehr feinen Schneidmittel auf das Endmaß gehont, wobei nur die Spitzen an der schon gehonten Oberfläche abgetragen werden. Für den späteren Einsatz des Werkstückes wird durch diese Bearbeitung die tragende Fläche für den in der Bohrung bewegten Kolben vergrößert.

Es ist auch bekannt, den letzten Verfahrensschritt durch Strahlen auszuführen, wofür auch Laserstrahlen eingesetzt werden (DE-A1-39 32 328). Mit dem Laserstrahl werden die Spitzen der gehonten Oberfläche hauptsächlich durch Abdampfen abgetragen, außerdem können auch Verschuppungen und lose anhaftende Partikel entfernt werden. Die Honspuren bleiben bei dieser Behandlung erhalten.

Es ist weiterhin eine Endbearbeitung fertiggehonter Bohrungen bekannt, bei der durch Bürsten und/oder Hochdruckstrahlen der sogenannte Blechmantel oder Verschuppungen beseitigt und die Graphitlamellen des Werkstoffes weitgehend freigelegt werden (DE-OS 37 19 796). Auch bei dieser Endbearbeitung sollen die Honspuren erhalten bleiben, die für die spätere Schmiermittel-Verteilung notwendig sind.

Da der Schneidbelag der Honsteine, die für das Honen eingesetzt werden, werkstoffbedingt Unregelmäßigkeiten aufweist, ist die Ausbildung der Honspuren in Breite, Tiefe und Abstand unbestimmt. Außerdem entstehen durch die Verwendung dieser Honwerkzeuge, die meist sechs bis acht Honsteine auf ihrem Umfang verteilt aufweisen, über die Länge der Bohrung Abweichungen von der idealen Kreisform des Querschnittes, so daß die Bohrung an einigen Stellen in bezug auf das genaue Endmaß geringfügig verengt ist. An diesen Stellen wird durch einen nachfolgenden Verfahrensschritt mehr Material abgetragen als in den übrigen Bereichen, so daß der Traganteil der Oberfläche über die Länge der Bohrung schwankt, wobei zusätzlich Schwankungen in der Tiefe der Honspuren auftreten.

Der Erfindung liegt die Aufgabe zugrunde, die Feinbearbeitung der Werkstück-Oberflächen so auszuführen, daß ein Schmiermittel-Reservoir mit gleichmäßiger Verteilung des Schmiermittels erzielt wird. Auch soll über die Länge der Bohrung ein hoher und gleichmäßiger Anteil an tragender Fläche erreicht werden.

Die Aufgabe wird gemäß der Erfindung mit dem Verfahren nach dem Hauptanspruch gelöst.

Bei dem erfindungsgemäßen Verfahren werden anstelle der durch Honsteine erzeugten Honspuren in der Werkstückoberfläche durch Strahlen, beispielsweise mittels Laser, Riefen nach einem vorgegebenen Muster erzeugt, wodurch das notwendige Schmiermittel-Reservoir gebildet wird. Bei dieser Strahlbehandlung entstehen Riefen vorgegebener Tiefe nach dem definierten Muster, vorzugsweise mit regelmäßigen Überkreuzungen, wobei der Werkstoff am Rand der Riefen nicht aufgeworfen oder sonstwie verformt wird. Damit wird auch der sonst beim mechanischen Honen entstehende Blechmantel vermieden, also umgebogene Spitzen, welche die Graphitlamellen des Werkstoffes teilweise verdecken würden.

Der Verfahrensschritt der Riefenerzeugung durch Strahlbehandlung kann in der Reihenfolge der Feinbearbeitung beliebig ausgeführt werden. Beispielsweise wird nach dem Vorhonen die Oberfläche auf Fertigmaß fein gehont, so daß sie einen hohen Traganteil bei sehr geringer Tiefe der Honspuren erhält, und anschließend werden die Riefen durch Strahlen erzeugt.

Diese Strahlbehandlung ist aber auch vor dem Vorhonen oder, bei mehreren Honoperationen, zwischen zwei beliebigen Operationen oder als letzter Verfahrensschritt möglich. In jedem Fall wird ein definiertes, von der Kinematik des Strahlens abhängiges Muster von einander überkreuzenden Riefen erzeugt, die im späteren Einsatz des Werkstückes eine Verteilung des Schmiermittels mit einer Gleichmäßigkeit erlauben, wie dies bisher nicht möglich war.

Weitere Merkmale der Erfindung ergeben sich aus den Unteransprüchen.

Im folgenden wird das Verfahren im Zusammenhang mit der Feinbearbeitung einer Bohrungswandung anhand der rein schematischen Zeichnungen näher erläutert. Das Verfahren kann aber auch an gekrümmten, beispielsweise zylindrischen Außenflächen und auch an Planflächen angewendet werden. In den Zeichnungen zeigen
- Fig. 1: ein Honwerkzeug in der Bohrung eines Werkstückes,
- Fig. 2: ein in der Bohrung angeordnetes Werkzeug zum Strahlen,
- Fig. 3: eine ausschnittsweise Vergrößerung der Bohrungsoberfläche in Abwicklung,
- Fig. 4: eine Ansicht in Richtung des Pfeiles IV in Fig. 3,
- Fig. 5: einen Schnitt nach V-V in Fig. 3.

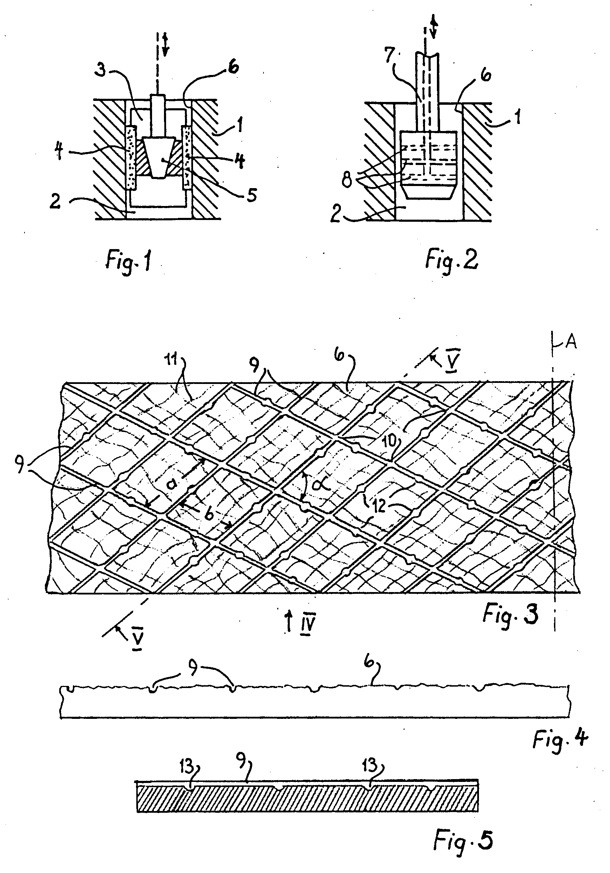

Fig. 1 zeigt schematisch ein Werkstück 1 mit einer Bohrung 2 im Axialschnitt. In der Bohrung befindet sich ein Honwerkzeug 3, das mit Honsteinen 4 bestückt ist. Es können beispielsweise sechs oder acht Honsteine über den Umfang des Honwerkzeuges 3 verteilt angeordnet sein. Die Honsteine sind wie üblich radial zustellbar, wofür eine axial verstellbare Stange mit endseitigem Konus 5 vorgesehen ist. Das Honwerkzeug 3 wird in üblicher Weise rotierend und in Richtung des Doppelpfeiles mit axialer Hubbewegung angetrieben, wobei die Honsteine 4 die zylindrische Bohrungswandung 6 bearbeiten.

Die Bohrungswandung 6 wurde vorgehont, wobei die Rauhtiefe geringer gehalten werden kann als es bisher üblich ist. Mit dem im Zusammenhang mit Fig. 1 erläuterten Verfahrensschritt wird die Bohrungswandung 6 auf Fertigmaß gehont, so daß sie also den vorgegebenen Enddurchmesser und die Zylindrizität in vorgegebenen Toleranzen erhält. Der Schneidbelag der Honsteine 4 ist so gewählt, daß die auf Fertigmaß gehonte Oberfläche, also die Bohrungswandung 6 sehr fein ist und einen sehr hohen Traganteil aufweist. Es ist also, anders als bei den in üblicher Weise gehonten Bohrungswandungen, keine Grundstruktur der Oberfläche mit tiefen Honspuren vorhanden.

Fig. 2 zeigt schematisch die Anordnung zur Ausführung des zweiten Verfahrensschrittes. In der Bohrung 2 befindet sich eine Behandlungs-Vorrichtung 7, die hier als Strahlwerkzeug mit Düsen 8 angedeutet ist, durch die hindurch eine Flüssigkeit unter Hochdruck derart ausgebracht wird, daß die Strahlen radial auf die Bohrungswandung 6 treffen. Das Strahlwerkzeug wird in gleicher Weise wie das Honwerkzeug 3 rotierend und mit axialen Hubbewegungen angetrieben. Die Behandlungsvorrichtung 7 soll aber vorzugsweise ein Laser sein, der in gleicher Weise angetrieben, aber auch mit einer drehbaren Optik versehen sein kann, so daß er nur axial in die Bohrung eingefahren und aus ihr ausgefahren wird.

Mit der Vorrichtung 7 werden in der Oberfläche Riefen 9 erzeugt, wie dies schematisch in den Fig. 3 bis 5 dargestellt ist. Fig. 3 zeigt ausschnittsweise und schematisch eine Abwicklung der Bohrungsoberfläche; die Bohrungsachse A ist strichpunktiert angedeutet. Das Verhältnis von Hub- und Drehgeschwindigkeit der Behandlungs-Vorrichtung 7 ist so eingestellt, daß ein Überschneidungswinkel der Riefen 9 zwischen 20° und 75° erreicht wird, im Ausführungsbeispiel beträgt der Winkel annähernd 70°. An den Kreuzungsstellen 10 kommunizieren die einander schneidenden Riefen 9. Da bei der Strahlbehandlung, insbesondere bei der berührungslosen Behandlung mittels Laser, an den Rändern der Riefen keine Materialanhäufungen, Abplattungen oder Schuppen entstehen, sind auch die Kreuzungsstellen 10 völlig frei, so daß eine optimale Verteilung des Schmiermittels in dem durch die Riefen gebildeten Reservoir gegeben ist.

Die Intensität und die Breite des Laser- oder Hochdruckflüssigkeits-Strahles und die Verfahrbewegung der Vorrichtung werden so gewählt, daß die Riefen 9 eine gewünschte Breite und Tiefe erhalten, die wesentlich größer ist als die in Fig. 3 durch Honspuren 11 angedeutete Rauhtiefe. Die Breite der Riefen 9 soll etwa 10 »m bis 70 »m und ihre Tiefe etwa 5 »m bis 15 »m betragen.

An mehreren Stellen der Riefen können Verbreiterungen 12 und Vertiefungen 13 vorgesehen sein, wobei die Vertiefungen an den Stellen der Verbreiterungen liegen können. Die Verteilung der Verbreiterungen und Vertiefungen über die Länge der Riefen kann so gewählt werden, daß pro mm der Länge eine Vertiefung/Verbreiterung oder auch bis zu 10 Vertiefungen/Verbreiterungen vorhanden sind (in Fig. 3 nicht maßstabgerecht dargestellt). Die Riefen können an den Stellen 12 auf ca. 30 »m bis 100 »m verbreitert werden, und die Vertiefungen können eine Tiefe von etwa 25 »m bis 50 »m haben.

Der Abstand a bzw. b zwischen in gleicher Richtung verlaufenden, benachbarten Riefen 9 soll zwischen 0,1 mm und 1 mm betragen, wobei die Abstände a und b gleich groß oder - wie in Fig. 3 dargestellt - verschieden sein können. Für die geringen Abstände kann es erforderlich sein, die Vorrichtung 9 in mehreren Hüben durch die Bohrung 2 hindurchzuführen. Bei Verwendung eines Lasers können zur Erzielung des geringen Abstandes auch mehrere Ablenkspiegel vorgesehen werden. Es ist für die Behandlungsvorrichtung 7 eine - nicht dargestellte - Steuerung vorgesehen, mit der die Riefenabstände a und b eingestellt werden können.

## Patentansprüche

1. Verfahren zur Feinbearbeitung von Werkstück-Oberflächen (6), insbesondere von Wandungen der Bohrungen (2) im Zylinder eines Verbrennungsmotors, durch Honen und Strahlen, zur Erzielung von hinsichtlich Reibung und Temperatur hochbelastbaren Oberflächen, die im Einsatz des Werkstückes mit Schmiermittel zu versorgen sind, dadurch gekennzeichnet, daß in der Oberfläche (6) durch Strahlbehandlung Riefen (9) erzeugt werden, die als Schmiermittel-Reservoir nach einem vorgegebenen Muster angeordnet sind.

2. Verfahren nach Anspruch 1,
dadurch gekennzeichnet, daß die Oberfläche (6) auf Fertigmaß mit sehr geringer Rauhtiefe und hohem Traganteil gehont wird, derart, daß die bei der Strahlbehandlung erzeugten Riefen (9) tiefer sind als die Honspuren (11) und ausschließlich oder überwiegend das Schmiermittel-Reservoir der fertigen Oberfläche (6) bilden.

3. Verfahren nach Anspruch 1 oder 2,
dadurch gekennzeichnet, daß durch das Strahlen ein Muster überkreuzender Riefen (9) erzeugt wird, die an den Kreuzungsstellen (10) zur Verteilung des Schmiermittels kommunizieren.

4. Verfahren nach einem der Ansprüche 1 bis 3,
dadruch gekennzeichnet, daß der Überschneidungswinkel (α) der Riefen (9) - bei einer Bohrungswandung (6) in der Abwicklung horizontal gemessen - zwischen 20° und 75° beträgt.

5. Verfahren nach einem der Ansprüche 1 bis 4,
dadurch gekennzeichnet, daß die Riefen (9) eine mittlere Breite von 10 »m bis 70 »m und eine Tiefe von etwa 5 »m bis 15 »m haben.

6. Verfahren nach einem der Ansprüche 1 bis 5,
dadurch gekennzeichnet, daß die Riefen (9) über ihre Länge verteilt Vertiefungen (13) aufweisen, wobei ihre Tiefe an diesen Stellen vorzugsweise zwischen etwa 25 »m und 50 »m beträgt.

7. Verfahren nach einem der Ansprüche 1 bis 6,
dadurch gekennzeichnet, daß die Riefen (9) über ihre Länge verteilt, insbesondere an vertieften Stellen (13), Verbreiterungen (12) aufweisen, wobei die Breite der Riefen (9) an den Stellen der Verbreiterungen (12) vorzugsweise etwa 30 »m bis 100 »m beträgt.

8. Verfahren nach Anspruch 6 oder 7,
dadurch gekennzeichnet, daß die Riefen (9) auf einer Länge von 0,1 mm bis 1,0 mm jeweils eine Vertiefung (13) und/oder eine Verbreiterung (12) aufweisen.

9. Verfahren nach einem der Ansprüche 1 bis 8,
dadurch gekennzeichnet, daß benachbarte, in gleicher Richtung verlaufende Riefen (9) einen Abstand (a; b) von 0,1 bis 1,0 mm haben.

10. Verfahren nach Anspruch 9,
dadurch gekennzeichnet, daß der Abstand (a; b) durch Steuerung des Strahlvorganges einstellbar ist.

11. Verfahren nach einem der Ansprüche 1 bis 10,
dadurch gekennzeichnet, daß das Strahlen mittels eines Lasers ausgeführt wird.

12. Verfahren nach einem der Ansprüche 1 bis 10,
dadurch gekennzeichnet, daß das Strahlen mittels Flüssigkeit unter Hochdruck ausgeführt wird.

13. Verfahren nach einem der Ansprüche 2 bis 12,
dadurch gekennzeichnet, daß die Oberfläche (6) zunächst auf Fertigmaß feingehont wird und anschließend mittels Strahlen die Riefen (9) erzeugt werden.

14. Verfahren nach einem der Ansprüche 2 bis 12,
dadurch gekennzeichnet, daß die Oberfläche (6) in mehreren Honoperationen auf Fertigmaß feingehont wird, und daß die Strahlbehandlung zur Erzeugung der Riefen (9) zwischen zwei Honoperationen ausgeführt wird.

15. Verfahren nach einem der Ansprüche 2 bis 12,
dadurch gekennzeichnet, daß die Oberfläche (6) nach dem Feinbohren durch Strahlen zur Erzeugung der Riefen (9) behandelt und anschließend in einer oder mehreren Honoperationen feinbearbeitet wird, wobei insbesondere auf die Strahlbehandlung ein Vorhonen folgt.

16. Verfahren nach einem der Ansprüche 1 bis 15,
dadurch gekennzeichnet, daß als letzter Verfahrensabschnitt eine Plateauhonoperation ausgeführt wird.

## Claims

1. Method for the fine machining of workpiece surfaces (6), in particular of the walls of bores (2) in the cylinder of an internal combustion engine, by honing and jetting, to achieve surfaces which can withstand a high load as regards friction and temperature, which are to be supplied with lubricant during the use of the workpiece, characterised in that channels (9) are produced in the surface (6) by jetting treatment, which channels (9) are arranged according to a predetermined pattern as a lubricant reservoir.

2. Method according to Claim 1, characterised in that the surface (6) is honed to the finished size with a very small peak-to-valley height and a high percentage of contact area so that the channels (9) produced during the jetting treatment are deeper than the honing traces (11) and exclusively or predominantly form the lubricant reservoir of the finished surface (6).

3. Method according to Claim 1 or 2, characterised in that a pattern of overlapping channels (9) is produced by jetting, which at the intersection points (10) communicate for the distribution of the lubricant.

4. Method according to one of Claims 1 to 3, characterised in that the overlapping angle (α) of the channels (9) - measured horizontally in developed projection in the case of a bore wall (6) - amounts to between 20° and 75°.

5. Method according to one of Claims 1 to 4, characterised in that the channels (9) have an average width of 10 »m to 70 »m and a depth of approximately 5 »m to 15 »m.

6. Method according to one of Claims 1 to 5, characterised in that the channels (9) have recesses (13) distributed over their length, their depth at these points preferably amounting to between approximately 25 »m and 50 »m.

7. Method according to one of Claims 1 to 6, characterised in that the channels (9) have enlargements (12) distributed over their length, in particular at recessed points (13), the width of the channels (9) at the points of the enlargements (12) preferably amounting to approximately 30 »m to 100 »m.

8. Method according to Claim 6 or 7, characterised in that over a length of 0.1 mm to 1.0 mm, the channels (9) respectively have a recess (13) and/or an enlargement (12).

9. Method according to one of Claims 1 to 8, characterised in that adjacent channels (9) extending in the same direction have a spacing (a; b) of 0.1 to 1.0 mm.

10. Method according to Claim 9, characterised in that the spacing (a; b) can be adjusted by controlling the jetting process.

11. Method according to one of Claims 1 to 10, characterised in that the jetting is carried out by means of a laser.

12. Method according to one of Claims 1 to 10, characterised in that the jetting is carried out by means of liquid at high pressure.

13. Method according to one of Claims 2 to 12, characterised in that the surface (6) is first of all fine honed to finished size and then the channels (9) are produced by means of jetting.

14. Method according to one of Claims 2 to 12, characterised in that the surface (6) is fine honed to finished size in several honing operations and that the jetting treatment for producing the channels (9) is carried out between two honing operations.

15. Method according to one of Claims 2 to 12, characterised in that after fine boring, the surface (6) is treated by jets to produce the channels (9) and then is fine machined in one or more honing operations, in particular pre-honing following the jetting treatment.

16. Method according to one of Claims 1 to 15, characterised in that a plateau honing operation is carried out as the last stage of the method.

## Revendications

1. Procédé pour le finissage de surfaces de pièces (6), de parois d'alésages (2) dans le cylindre d'un moteur à combustion interne, notamment, par honage et projection de jets, en vue d'obtenir des surfaces à haute capacité de charge quant au frottement et à la température, qui doivent être alimentées en lubrifiant lors de l'utilisation de la pièce, caractérisé en ce que des stries (9), disposées suivant un modèle prédéfini en tant que réservoir de lubrifiant, sont produites dans la surface (6) par traitement aux jets.

2. Procédé suivant la revendication 1, caractérisé en ce que la surface (6) est honée à la dimension finale avec une profondeur de rugosité minime et une part portante élevée, de sorte que les stries (9), produites par le traitement aux jets, sont plus profondes que les traces de honage (11), et forment exclusivement ou essentiellement le réservoir de lubrifiant de la surface finie (6).

3. Procédé suivant l'une des revendications 1 ou 2, caractérisé en ce qu'un modèle de stries en croix (9), qui communiquent aux points d'intersection (10) pour la répartition du lubrifiant, est produit par la projection de jets.

4. Procédé suivant l'une quelconque des revendications 1 à 3, caractérisé en ce que l'angle d'intersection (α) des stries (9) est compris entre 20 et 75°, pour une paroi d'alésage (6) mesurée à l'horizontale en projection développée.

5. Procédé suivant l'une quelconque des revendications 1 à 4, caractérisé en ce que les stries (9) ont une largeur moyenne de 10 »m à 70 »m et une profondeur de l'ordre de 5 »m à 15 »m.

6. Procédé suivant l'une quelconque des revendications 1 à 5, caractérisé en ce que les stries (9) présentent des cavités (13) réparties sur leur longueur, leur profondeur en ces points étant de préférence de l'ordre de 25 à 50 »m.

7. Procédé suivant l'une quelconque des revendications 1 à 6, caractérisé en ce que les stries (9) présentent des élargissements (12) répartis sur leur longueur, aux points des cavités (13) notamment, la largeur des stries (9) aux points des élargissements (12) étant de préférence de l'ordre de 30 à 100 »m.

8. Procédé suivant l'une des revendications 6 ou 7, caractérisé en ce que les stries (9) présentent respectivement une cavité (13) et/ou un élargissement (12) sur une longueur de 0,1 mm à 1,0 mm.

9. Procédé suivant l'une quelconque des revendications 1 à 8, caractérisé en ce que des stries adjacentes (9), situées dans le même sens, ont un écartement (a; b) de 0,1 à 1,0 mm.

10. Procédé suivant la revendication 9, caractérisé en ce que l'écartement (a; b) est réglable par la commande de la projection de jets.

11. Procédé suivant l'une quelconque des revendications 1 à 10, caractérisé en ce que la projection de jets est réalisée au moyen d'un laser.

12. Procédé suivant l'une quelconque des revendications 1 à 10, caractérisé en ce que la projection de jets est réalisée au moyen d'un liquide sous haute pression.

13. Procédé suivant l'une quelconque des revendications 2 à 12, caractérisé en ce que la surface (6) est d'abord honée à la dimension finale, puis les stries (9) sont produites par projection de jets.

14. Procédé suivant l'une quelconque des revendications 2 à 12, caractérisé en ce que la surface (6) est honée à la dimension finale en plusieurs opérations de honage, et en ce que le traitement aux jets est réalisé entre deux opérations de honage pour produire les stries (9).

15. Procédé suivant l'une quelconque des revendications 2 à 12, caractérisé en ce que la surface (6) est traitée par projection de jets pour produire les stries (9), après l'alésage de finition, puis est finie en une ou plusieurs opérations de honage, le traitement aux jets étant suivi d'un honage préalable, notamment.

16. Procédé suivant l'une quelconque des revendications 1 à 15, caractérisé en ce qu'une opération de rodage entre plateaux est réalisée comme dernière phase du procédé.
